# EUROPEAN PATENT APPLICATION

(11) **EP 4 752 604 A1**
(43) Date of publication of application: **03.06.2026**
(21) Application number: 25211940.9
(22) Date of filing: 29.10.2025
(51) Int. Cl.: G01S 19/40, G01S 19/43, G01S 19/14, G01S 19/39, A01D 34/00

(54) **IMPROVED POSITIONING FOR A ROBOTIC LAWNMOWER**

(30) Priority: 27.11.2024 SE 2451198
(71) Applicant: Husqvarna AB, 561 82 Huskvarna (SE)
(72) Inventor: Fungbrandt, Niklas, 561 82 Huskvarna (SE)

(57) **Abstract**

A method for use in a robotic lawnmower system comprising a robotic lawnmower (100) arranged to operate in an outdoor operational area (205), the robotic lawnmower comprising a satellite navigation sensor and being arranged to operate based on a GCS source. The method comprises the robotic lawnmower receiving error correction data for satellite navigation from a GCS source through the communication interface (115) and determine (410) a current position based on the received error correction data and the satellite navigation sensor (175), wherein the method further comprises navigating (420) based on based on the satellite navigation sensor (175) or based on the satellite navigation sensor (175) in combination with received error correction data from a first GCS source (245-1), determining (430) that operating conditions have changed, and in response thereto navigating (440) based on based on the satellite navigation sensor (175) in combination with received error correction data from a second GCS source (245-2).

## Description

### TECHNICAL FIELD

This application relates to a robotic lawnmower and a method for providing an improved positioning, and in particular for an improved positioning utilizing PPP-RTK.

### BACKGROUND

Automated or robotic lawnmowers are becoming increasingly more popular and so is the use of the robotic lawnmower in various types of operational areas. Such operational areas often include sensitive features (flower beds and so on) that should be left undisturbed by the operation. As many such areas are in populated areas, such as suburban family areas, where children and pets are about, it is important that the robotic lawnmower keep inside operational area boundaries. Lately, GNSS navigation has enabled a more precise navigation, which also allows for operating without a (semi) physical boundary, such as a boundary wire. However, even though GNSS accuracy is only in the range of a few meters, this is not enough for the precise requirements of modem day robotic lawnmowers. Real-Time Kinematic, RTK, systems have been used to improve the accuracy, but this requires the mounting of a local RTK base station (or beacon) to be placed in the operational area, for example a garden, which has shown to be problematic for many homeowners.

The prior art of the patent document published as WO2023234551A1 discloses a method according to an embodiment may comprise the steps of: selecting a first correction method from among a plurality of correction methods to which priorities have been assigned; determining a current location of a moving body by using a GNSS signal, and first correction data corresponding to the first correction method; when an event situation occurs, storing log information including location information at which the event situation has occurred; after the log information is stored, when the current location of the moving body corresponds to the location information included in the log information, changing a priority assigned to at least one of the plurality of correction methods; selecting a second correction method on the basis of the changed priority; and determining a current location of the moving body by using second correction data corresponding to the second correction method, and a GNSS signal.

The prior art of the patent document published as US2019346848A1 discloses a moving method of a self-moving device, including: presetting a preset movement path of a self-moving device; enabling the self-moving device to move along the preset movement path; and checking whether a moving direction of the self-moving device deviates from the preset movement path, and when the moving direction deviates from the preset movement path, calibrating the moving direction of the self-moving device to enable the self-moving device to move along the preset movement path, wherein, the preset movement path including several first path segments, the first path segment being divided into several sub-path segments, and an end point of the sub-path segment being referred to as a node; and the calibrating the moving direction of the self-moving device includes: calibrating the moving direction of the self-moving device by using the node as a target point.

The prior art of the patent document published as US2024126293A1 discloses a positioning processing unit measures the position of a work vehicle by a predetermined positioning method on the basis of a GNSS signal received from a satellite. A travel processing unit causes the work vehicle to travel automatically on the basis of position information of the work vehicle. A switching processing unit can switch between an RTK method and a DGPS method. A setting processing unit sets the work mode of the work vehicle to either a work accuracy preferential mode or a work continuity preferential mode. The switching processing unit switches between the RTK method and the DGPS method on the basis of the work mode and the positioning state.

Another alternative is the use of Precise Point Positioning, PPP, which allows for correction data to be received via a server (as an example of an information provider). And, a combined technique, one example which is called PPP-RTK which stands for Precise Point Positioning - Real-Time Kinematic. PPP-RTK is a technique used in satellite-based positioning and navigation that combines the advantages of Precise Point Positioning (PPP) and Real-Time Kinematic (RTK) to provide highly accurate geolocation data. PPP-RTK is one example of a GNSS Correction Service source, hereafter a GCS source.

### SUMMARY

The inventors have realized that a naïve approach to using services such as PPP or PPP-RTK quickly ramps up the costs for operating and running a robotic lawnmower. The inventors have realized that these costs relate both to the cost of the service provided, and to the communication cost for receiving the error correction data.

It is therefore an object of the teachings of this application to overcome or at least reduce those problems by providing a robotic lawnmower system comprising a robotic lawnmower arranged to operate in an outdoor operational area, and the robotic lawnmower comprising a satellite navigation sensor, a communication interface and a controller, wherein the controller is configured to receive error correction data for satellite navigation from a GCS source through the communication interface and determine a current position based on the received error correction data and the satellite navigation sensor, wherein the controller is further configured to navigate based on based on the satellite navigation sensor or based on the satellite navigation sensor in combination with received error correction data from a first GCS source, determine that operating conditions have changed, and in response thereto navigate based on based on the satellite navigation sensor in combination with received error correction data from a second GCS source as per the appended claims.

It is also an object of the teachings of this application to overcome the problems by providing a method for use in a robotic lawnmower system comprising a robotic lawnmower arranged to operate in an outdoor operational area, the robotic lawnmower comprising a satellite navigation sensor and being arranged to operate based on a GCS source. The method comprises the robotic lawnmower receiving error correction data for satellite navigation from a GCS source through the communication interface and determine a current position based on the received error correction data and the satellite navigation sensor, wherein the method further comprises navigating based on based on the satellite navigation sensor or based on the satellite navigation sensor in combination with received error correction data from a first GCS source, determining that operating conditions have changed, and in response thereto navigating based on the satellite navigation sensor in combination with received error correction data from a second GCS source as per the appended claims.

Further embodiments and aspects are as in the attached patent claims and as discussed in the detailed description.

Other features and advantages of the disclosed embodiments will appear from the following detailed disclosure, from the attached dependent claims as well as from the drawings. Generally, all terms used in the claims are to be interpreted according to their ordinary meaning in the technical field, unless explicitly defined otherwise herein. All references to "alan/the [element, device, component, means, step, etc.]" are to be interpreted openly as referring to at least one instance of the element, device, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention will be described in further detail under reference to the accompanying drawings in which:
Figure 1A shows a schematic view of the components of an example of a robotic lawnmower according to some example embodiments of the teachings herein;
Figure 2 shows a schematic view of a robotic lawnmower system according to some example embodiments of the teachings herein;
Figures 3A to 3F each shows a schematic view of a robotic lawnmower system according to some example embodiments of the teachings herein; and
Figure 4 shows a corresponding flowchart for a method according to some example embodiments of the teachings herein.

### DETAILED DESCRIPTION

The disclosed embodiments will now be described more fully hereinafter
with reference to the accompanying drawings, in which certain embodiments of the invention are shown. This invention may, however, be embodied in many different forms and should not be construed as limited to the embodiments set forth herein. Like reference numbers refer to like elements throughout.

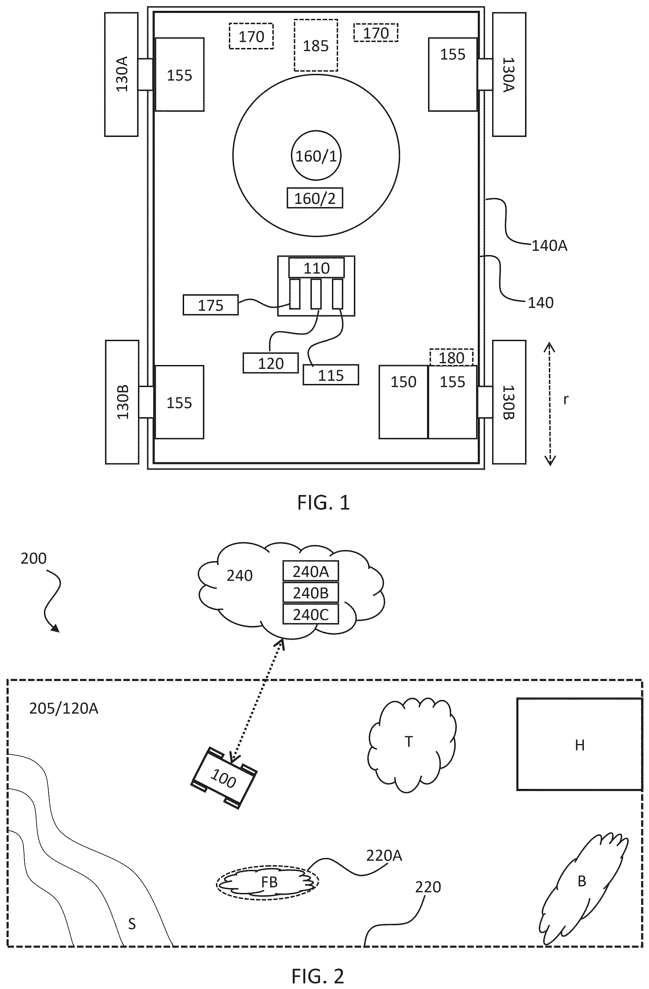

Figure 1 shows a schematic overview of a robotic lawnmower 100. The robotic lawnmower 100 may be a multi-chassis type or a mono-chassis type (as in figure 1). A multi-chassis type comprises more than one main body parts that are movable with respect to one another. A mono-chassis type comprises only one main body part.

It should be noted that robotic lawnmower may be of different sizes, where the size ranges from merely a few decimetres for small garden robots (commonly mono-chassis), to even more than 1 meter for large robots (commonly multi-chassis) arranged to service for example airfields.

It should also be noted that the robotic lawnmower is a self-propelled robotic lawnmower, capable of autonomous navigation within an outdoor operational area, where the robotic lawnmower propels itself across or around the outdoor operational area in a pattern (random or predetermined).

The robotic lawnmower 100 has a main body part 140, possibly comprising a chassis 140 and an outer shell 140A, and a plurality of wheels 130 (in this example four wheels 130, but other number of wheels are also possible, such as three or six).

The main body part 140 substantially houses all components of the robotic lawnmower 100. At least some of the wheels 130 are drivably connected to at least one electric motor 155 powered by a battery 150. It should be noted that even if the description herein is focused on electric motors, combustion engines may alternatively be used, possibly in combination with an electric motor. In the example of figure 1, each of the wheels 130 is connected to a common or to a respective electric motor 155 for driving the wheels 130 to navigate the robotic lawnmower 100 in different manners. The wheels, the motor 155 and possibly the battery 150 are thus examples of components making up a propulsion device. By controlling the motors 155, the propulsion device may be controlled to propel the robotic lawnmower 100 in a desired manner, and the propulsion device will therefore be seen as synonymous with the motor(s) 150. It should be noted that wheels 130 driven by electric motors is only one example of a propulsion system and other variants are possible such as caterpillar tracks.

The robotic lawnmower 100 also comprises a controller 110 and a computer readable storage medium or memory 120. The controller 110 may be implemented using instructions that enable hardware functionality, for example, by using executable computer program instructions in a general-purpose or special-purpose processor that may be stored on the memory 120 to be executed by such a processor. The controller 110 is configured to read instructions from the memory 120 and execute these instructions to control the operation of the robotic lawnmower 100 including, but not being limited to, the propulsion and navigation of the robotic lawnmower.

It should be noted that the controller may comprise or be connected to one or more controllers, such as processors or processor arrangement, working in unison or on individual tasks for a combined operation. For example, the controller 110 may comprise a controller in the GNSS sensor 175, and/or in (any of) the deduced reckoning sensor(s) 180 for preprocessing navigation data, for example to provide a location/position. For the purpose of the teachings herein, any and all of such controllers, processors or processor arrangements will be referred to in common as the controller 110.

The controller 110 in combination with the electric motor 155 and the wheels 130 forms the base of a navigation system (possibly comprising further components) for the robotic lawnmower, enabling it to be self-propelled as discussed.

The controller 110 may be implemented using any suitable, available processor or Programmable Logic Circuit (PLC). The memory 120 may be implemented using any commonly known technology for computer-readable memories such as ROM, FLASH, DDR, or some other memory technology.

The robotic lawnmower 100 also comprises a work tool 160, which in the example of the robotic lawnmower 100 is a grass cutting device 160, such as a rotating blade 160/2 driven by a cutter motor 160/1. In embodiments where the robotic lawnmower 100 is exemplified as an automatic grinder, the work tool 160 is a rotating grinding disc.

The robotic lawnmower 100 is further arranged with a wireless communication interface 115 for communicating with other devices, such as a server (referenced 240 in figure 2), a personal computer, a smartphone, the charging station, and/or other robotic lawnmowers. Examples of such wireless communication devices are Bluetooth^{®}, WiFi^{®} (e.g. IEEE802.11ax), Global System Mobile (GSM), LTE (Long Term Evolution, also called 4G) and/or 5G systems, to name a few. The robotic lawnmower 100 may be arranged to communicate with a user equipment (not shown but will be regarded as being an example of a server, as an example of a connected device) as discussed in relation to figure 2 below for providing information regarding status, location, and progress of operation to the user equipment as well as receiving commands or settings from the user equipment.

The robotic lawnmower 100 may be arranged to communicate with a server (referenced 240 in figure 2) for providing information regarding status, and progress of operation as well as receiving commands or settings.

Specifically, the robotic lawnmower 100 is arranged to communicate with a server (referenced 240 in figure 2) for providing information on a signal error with received satellite signals. The communication may be direct where the robotic lawnmower itself access the server (through an internet connection of course) or indirect, where the connection is established through a supplementary device, such as a personal computer or personal smartphone. This enables to robotic lawnmower 100 to operate according to a technique such as PPP-RTK.

Navigation, such as PPP and PPP-RTK, based on GCS sources where the correction signal is received from a server - and not a base station - provides a system that is easy to implement as multiple beacons are not needed - as in prior art systems. Such network-based GNSS correction sources (like PPP and PPP-RTK) where the receiver thus gets correction data from a server over the internet, rather than from a physically nearby base station.

In contrast Base-station-based methods (e.g., DGPS, RTK) rely on a nearby ground reference station broadcasting corrections over radio or local network.

However, while the use of base stations does not incur any additional costs while running the system, network-based GNSS Correction Signal sources may do so, why traditionally a user or operator has been tied to one subscriber.

The connection with the server - or at least to receive information from the server - may be established by the communication interface being connected to a Wireless Local Area Network (WLAN), such as a WiFi^{™} network, through a Bluetooth connection to an internet gateway (possibly utilizing a smartphone or other personal computing device. The connection with the server - or at least to receive information from the server - may alternatively or additionally be established by the communication interface being connected to the cloud through a cellular communication interface (such as 3G, 4G, 5G, or any future cellular communication interface. As a skilled person would understand, there are many manners to connect to a server, and further details are seen as generally known and understood, requiring no further explanation.

The robotic lawnmower 100 comprises a satellite signal navigation sensor 175 configured to provide navigational information (such as position) based on receiving one or more signals from a satellite - possibly in combination with receiving a signal from a base station. In some embodiments the satellite navigation sensor is a GPS (Global Positioning System) device or other Global Navigation Satellite System (GNSS) device for providing PPP navigation. In some embodiments the satellite navigation sensor 175 is a RTK sensor for providing PPP-RTK navigation. This enables the robotic lawnmower to operate in an outdoor operational area bounded by a virtual border (not shown explicitly in figure 2 but deemed to be included in the boundary 220 irrespective whether a physical boundary is used or not).

In some embodiments, the robotic lawnmower 100 also comprises deduced reckoning sensors 180. The deduced reckoning sensors 180 may be odometers, accelerometers, gyroscopes or other deduced reckoning sensors. In such embodiments, the deduced reckoning sensors 180 are used to supplement the positioning based on the satellite navigation sensor 175. In some embodiments, the deduced reckoning sensors are comprised in the propulsion device, wherein a deduced reckoning navigation may be provided by knowing the current supplied to a motor and the time the current is supplied, which will give an indication of the speed and thereby distance for the corresponding wheel.

In some embodiments, the robotic lawnmower comprises a visual sensor 185, possibly comprised in or connected to the deduced reckoning sensors 180 as a visual odometry sensor. In such embodiments, the visual sensor 185 is used to supplement the positioning based on the satellite navigation sensor 175.

The deduced reckoning sensors 180, especially in combination with the visual odometry sensor 185, enables the robotic lawnmower to operate according to a map of the outdoor operational area thereby supplementing any positioning and/or navigation based on the satellite navigation sensor 175. In some such embodiments, the navigation is based on Simultaneous Localization And Mapping, SLAM, and in some embodiments, where a visual odometry sensor (such as a camera) 185 is utilized, the navigation is based on V-SLAM.

In some embodiments, for enabling the robotic lawnmower 100 to navigate with reference to a wire, such as a boundary wire or a guide wire (emitting a magnetic field caused by a control signal transmitted through the wire), the robotic lawnmower 100 is, in some such embodiments, configured to have at least one magnetic field sensor 170 arranged to detect the magnetic field and for detecting the wire and/or for receiving (and possibly also sending) information to/from a signal generator. In some embodiments, such a magnetic boundary is used to provide a border (not shown explicitly in figure 2 but deemed to be included in the boundary 220) enclosing an outdoor operational area (referenced 205 in figure 2). In such embodiments, the magnetic sensor(s) is used to supplement the positioning based on the satellite navigation sensor 175 or for example to establish a safety boundary in jurisdiction where such is required.

The robotic lawnmower 100 is in some embodiments arranged to operate according to a map application (indicated in figure 2 and referenced 120A) representing one or more operational areas (and possibly the surroundings of the outdoor operational area(s)) as well as features of the outdoor operational area(s) stored in the memory 120 of the robotic lawnmower 100. In some embodiments, the map is also or alternatively stored in the memory of a server (referenced 240 in figure 2). The map application may be generated or supplemented as the robotic lawnmower 100 operates or otherwise moves around in the outdoor operational area. In some embodiments, the map application is downloaded, possibly from a server. In some embodiments, the map application also includes one or more transport areas. The robotic lawnmower 100 is arranged to navigate according to the map based on the satellite navigation sensors 175 (and/or deduced reckoning sensors 180) and - at least in some instances - based on error correction data received through the communication interface 115.

The robotic lawnmower 100 is thus enabled to determine its position and/or navigate according to a satellite error correction data system, such as PPP, PPP-RTK or Network-RTK. Such satellite error correction data systems are commonly referred to as GNSS Correction Services or simply Positioning Correction Services. These services provide real-time correction data to enhance the accuracy of positioning data from GNSS (Global Navigation Satellite System) receivers, making them suitable for applications that require high precision, such as robotic lawnmower navigation/positioning. For simplicity reasons, the following description will focus on PPP-RTK systems, but a skilled person would understand that thee same or similar applies to other GNSS Correction Services equally, and the teachings herein may also apply to such GNSS Correction Services.

**In** a PPP-RTK (Precise Point Positioning - Real-Time Kinematic) system (or other GCS source system), error correction data achieves high-precision positioning by correcting various types of errors that can impact GNSS (Global Navigation Satellite System) measurements. The main types of error corrections received in a PPP-RTK system are listed below. The error correction data often comes in formats like RTCM (Radio Technical Commission for Maritime Services), other proprietary or standardized formats may be used. The error correction data is continuously updated in real-time to maintain accuracy. It should be noted that the examples of error correction data are just that, examples, and many variations exist for what error correction data - and the format thereof - is used.

### 1. Satellite Orbit and Clock Corrections.

Purpose: Satellite orbits and clocks are two key sources of errors in GNSS. These errors stem from inaccuracies in the satellites' predicted positions and timing. Correction Data: A PPP-RTK system receives highly accurate satellite orbit and clock corrections from a global or regional reference network. These corrections account for deviations from predicted satellite orbits and clock drift, which can occur due to gravitational influences and satellite clock inconsistencies.

### 2. Atmospheric Corrections

Propagation Delay such as Ionospheric Delay: Ionospheric delay occurs as GNSS signals pass through the ionosphere, causing signal refraction. PPP-RTK systems use ionospheric correction data to model and correct these delays. Tropospheric Delay: The troposphere, closer to Earth's surface, also causes signal delays due to the presence of water vapor and varying atmospheric conditions. Tropospheric corrections are provided to compensate for this delay. Correction Sources: These corrections are typically generated from dense networks of ground-based GNSS receivers that observe atmospheric effects across different areas. The data is modelled and provided in real-time to correct for varying atmospheric conditions affecting signal propagation.

### 3. Satellite Bias Corrections

Phase and Code Biases: GNSS signals can experience biases in both carrier phase and pseudorange code measurements. These biases can affect accuracy if not accounted for. Correction Data: PPP-RTK systems receive bias corrections to adjust both code biases (errors in the timing signals) and phase biases (errors in phase measurements) for each satellite. Correcting these biases ensures more precise positioning.

### 4. Reference Station Data

Network Reference Corrections: **In** PPP-RTK, the system also uses data from regional reference station networks that observe GNSS signals over a wide area. This network provides local correction data that is distributed to user receivers, enabling near-instantaneous, accurate positioning over broad areas.

### 5. Error Correction Data Delivery

Data Transmission: All corrections are typically sent over satellite or cellular networks, allowing users to receive real-time updates. The error correction data enabled by the reference station network will eliminate the need of installing a dedicated local reference station.

In some embodiments the robotic lawnmower is arranged or configured to traverse and operate in outdoor operational areas that are not essentially flat, but contain terrain that is of varying altitude, such as undulating, comprising hills or slopes or such.

The outdoor operational area may contain obstacles that are overhanging, i.e. obstacles that may not be detectable from the ground up, such as low hanging branches of trees or bushes. Such a garden is thus not simply a flat lawn to be mowed, but an outdoor operational area of unpredictable structure and characteristics. The outdoor operational area exemplified with referenced to figure 2, may thus be such a non-uniform operational area as disclosed in this paragraph that the robotic lawnmower is arranged to traverse and/or operate in.

Figure 2 shows a robotic lawnmower system 200 in some embodiments. The schematic view is not to scale. The robotic lawnmower system 200 comprises one or more robotic lawnmowers 100 according to the teachings herein arranged to operate in one or more outdoor operational areas 205 possibly bounded by a boundary 220. It should be noted that the outdoor operational area 205 shown in figure 2 is simplified for illustrative purposes. The view of the outdoor operational area 205 is also intended to be an illustration or graphical representation of the map application 120A discussed in the above. The boundary 220 is primarily a virtual boundary (but may be supplemented by a physical boundary). There may also be one or more internal boundaries such as for protecting sensitive areas or features, such as flower beds. One example internal boundary 220A is illustrated. There may also be one or more implicit boundaries. Such implicit boundaries are for example made up of the extent of an object, such as a tree, preventing the robotic lawnmower to collide with the object. If no further details are given, there will be made no difference between an implicit boundary, an internal boundary or other boundaries, and they will all be discussed with regards to a boundary. As is shown in figure 2 there may be objects such as houses (H), structures, trees (T), bushes (B) to mention a few examples in the outdoor operational area 205. In figure 2 such objects are indicated and referenced H (as in house), trees (T), bushes (B) and slopes (S) as examples of obstacles and irregularities.

A server 240 is shown as a connected device for the robotic lawnmower 100 to communicate with to receive error correction data and possibly for receiving maps or map updates. The server 240 comprises a controller 240A for controlling the operation of the server 240, a memory 240B for storing instructions and data relating to the operation of the server 240 and a communication interface 240C for enabling the server 240 to communicate with other entities, such as the robotic lawnmower 100, and/or a User Equipment such as a mobile phone. The controller, the memory and the communication interface may be of similar types as discussed in relation to figure 1 for the robotic lawnmower 100. The connection may be direct or indirect as discussed in the above.

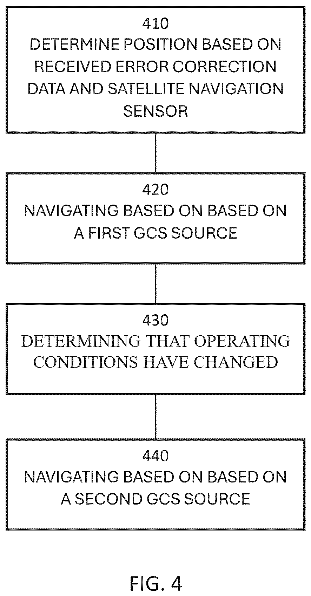

In the following simultaneous reference will be given to figure 4 showing a flowchart for a general method for performing the teachings herein in a robotic lawnmower 100.

As mentioned above, the robotic lawnmower 100 is enabled to receive error correction data from a GNSS Correction Service source, hereafter a GCS source. In the figures, the GCS source will be illustrated as being part of a corresponding server 240. It should be noted, and a s skilled person would understand, a same server may actually provide error correction data for more than one GCS source. The reference )240) to the server will therefore be omitted. As discussed in the introductory background section and summary section, a naive approach would be to operate based on the GCS source continuously or at more or less regular intervals. However, the inventors are proposing an adapted reliance on the GCS source, wherein the robotic lawnmower is configured to dynamically select when to operate based on the GCS source and/or to select which GCS source to operate based on.

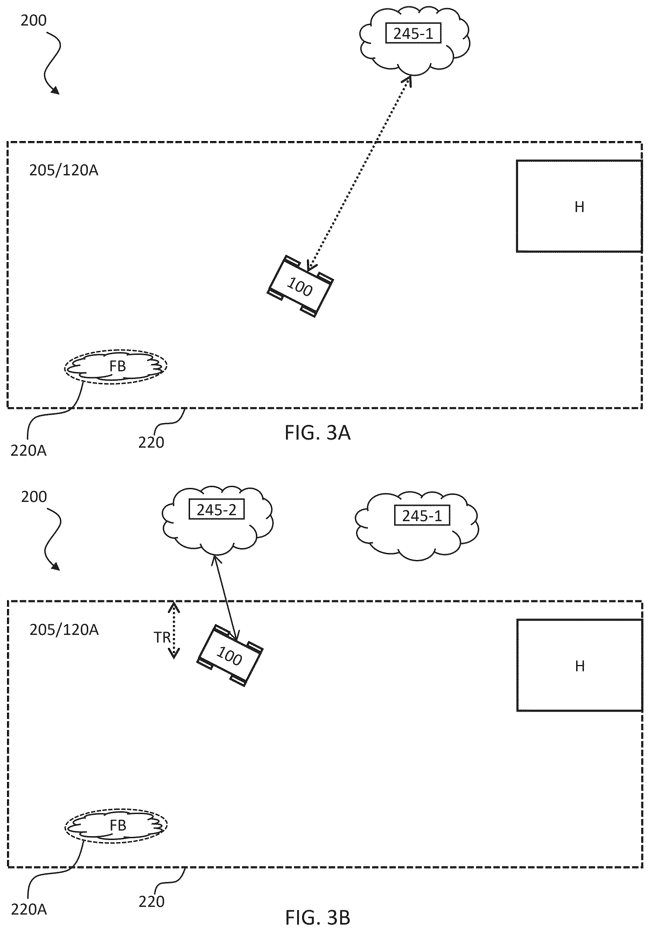

Figure 3A shows a simplified schematic view of a robotic lawnmower system 200 as discussed in relation to figures 1 and 2. As the robotic lawnmower 100 is operating in the operational area 205, it operates based on a basic satellite setup. In some embodiments the basic satellite setup includes the satellite navigation sensor 175. In some embodiments the basic satellite setup includes the satellite navigation sensor 175 and a default GCS source 245-1. The default GCS source 245-1 is, in some embodiments, a GCS source having a low(er) cost associated with it. In the example of figure 3A, it is shown how a connection optionally is established with the default GCS source 245-1, as is indicated by the dotted double-arrow.

Figure 3B shows a simplified schematic view of a robotic lawnmower system 200 as discussed in relation to figures 1, 2 and 3A. In figure 3B it is shown how the robotic lawnmower 100 is within a threshold range of a boundary, in this example the outer boundary 220. As the robotic lawnmower 100 determines that it is within the threshold range, TR, of a boundary, the robotic lawnmower 100 starts operating based on a preferred satellite setup and operates based on the preferred satellite setup. The threshold range indicates the range within which, a high accuracy is needed. In some embodiments the preferred satellite setup includes the satellite navigation sensor 175 and a preferred GCS source 245-2. The preferred GCS source 245-2 is, in some embodiments, a GCS source having a high(er) accuracy associated with it. In the example of figure 3B, it is shown how a connection is established with the preferred GCS source 245-2, possibly instead of the default GCS source 245-1.

The robotic lawnmower 100 is thus enabled to dynamically switch from a first GCS source to a second GCS source depending on operating conditions, where the operating conditions may relate to a connection with a GCS source, a closeness to a boundary or being in an area marked with low reliability. The operating conditions may also or alternatively represent a desired (level of) performance, for example relating to the resulting accuracy of a determination of position. It should be noted that even though the description above has been made with reference to switching from a first to a second GCS source, the robotic lawnmower 100 may be associated with more than a first and a second GCS source, and the determinations made in any of the situations discussed above may be repeated and/or nestled. For example, operating based on a default GCS source and then switching to a backup GCS source may require further switches to backup GCS sources. Also, while navigating based on a backup GCS source may require switching to a preferred GCS source when approaching a boundary, and again switching to a second GCS source.

A skilled person would understand that the 245-1 and 245-2 can be followed by additional sources, the teachings herein thus not limited to two sources.

In some embodiments, the threshold range, TR, is absolute, for example 1.5m, 1 m, or 0.5 m. In some embodiments, the threshold range, TR, is relative, for example 2x, 1.5x, 1x, or 0.5x, where 'x' denotes times the size (width or length) of the robotic lawnmower 100 or the cutting disc.

In some embodiments, the default GCS source 245-1 has a lower cost and/or accuracy associated with it compared to the preferred GCS source 245-2. In the example discussed with reference to figures 3A and 3B, the default GCS source 245-1 is an example of a first GCS source and the preferred GCS source 245-2 is an example of a second GCS source.

The basic setup is an example of a default setup, and the robotic lawnmower 100 is thus able to switch from a default setup (based on no or a first GCS source) to a preferred setup (based on a second GCS source), wherein the default setup is an example of a first setup and the preferred setup is an example of a second setup.

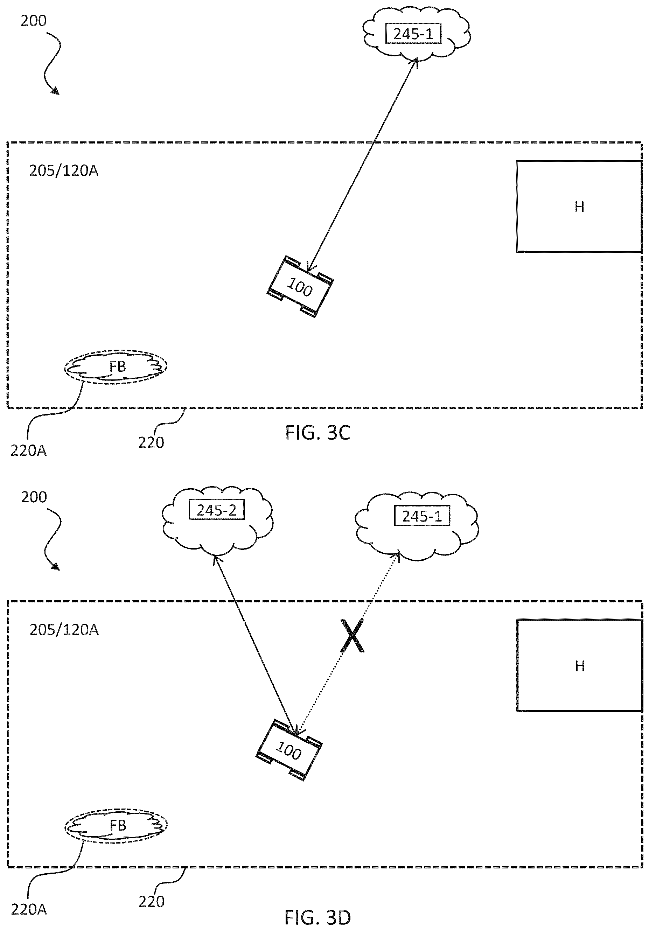

Figure 3C shows a simplified schematic view of a robotic lawnmower system 200 as discussed in relation to figures 1, 2, 3A and 3B. As the robotic lawnmower 100 is operating in the operational area 205, it operates based on a basic or default satellite setup, which in this example includes a default GCS source 245-1. The default GCS source of this example may be a preferred GCS source as discussed in relation to figure 3B.

Figure 3D shows a simplified schematic view of a robotic lawnmower system 200 as discussed in relation to figures 1, 2, 3A, 3B and 3C. In figure 3D it is shown how the robotic lawnmower 100 loses the connection with the default GCS source 245-1. As the robotic lawnmower 100 determines that the connection with the default GCS source 245-1 is not performing as desired, the robotic lawnmower 100 starts operating based on a backup satellite setup and operates based on the backup GCS source. In some embodiments the backup satellite setup includes the satellite navigation sensor 175 and a backup GCS source 245-2. The backup GCS source 245-2 is, in some embodiments, a GCS source having a high(er) cost and/or low(er) accuracy associated with it (compared to the default GCS source 245-1). In the example of figure 3D, it is shown how a connection is established with the backup GCS source 245-2, instead of the default GCS source 245-1. In the example discussed with reference to figures 3C and 3D, the default GCS source 245-1 is an example of a first GCS source and the backup GCS source 245-2 is an example of a second GCS source.

In some embodiments the determination that the connection with the GCS source is not performing as desired includes determining that the error correction data is not reliable. The determination that the error correction data is not reliable includes, in some embodiments, determining that the error correction data is received at a low quality (under a threshold where the error correction data cannot be interpreted correctly) or at long intervals (exceeding a time threshold), such as more than every 1, 2,,5, 10 or 20 seconds (or in any range thereinbetween). The determination that the error correction data is not reliable includes, in some embodiments, referring to a map indication that the robotic lawnmower is currently in - or about to enter (such as will be in that area within 1, 2v ,5, 10 or 20 seconds (or in any range thereinbetween)) - an area where it has been (previously) reported by the robotic lawnmower 100 that the GCS source is not reliable.

In some embodiments the determination that the connection with the GCS source is not performing as desired thus includes determining that the error correction data is received at too long intervals.

In some embodiments the determination that the connection with the GCS source is not performing as desired includes determining that the number of satellites in the error correction data is below a satellite threshold, whereby an accurate determination of position is not possible (or not accurate according to requirements).

In some embodiments the determination that the connection with the GCS source is not performing as desired includes determining that the error correction data is received at a signal quality level that is too low, the error correction data and the satellite signal data thus not being reliable, and the desired accuracy is not achieved, i.e. the accuracy of the determination falls under a required accuracy.

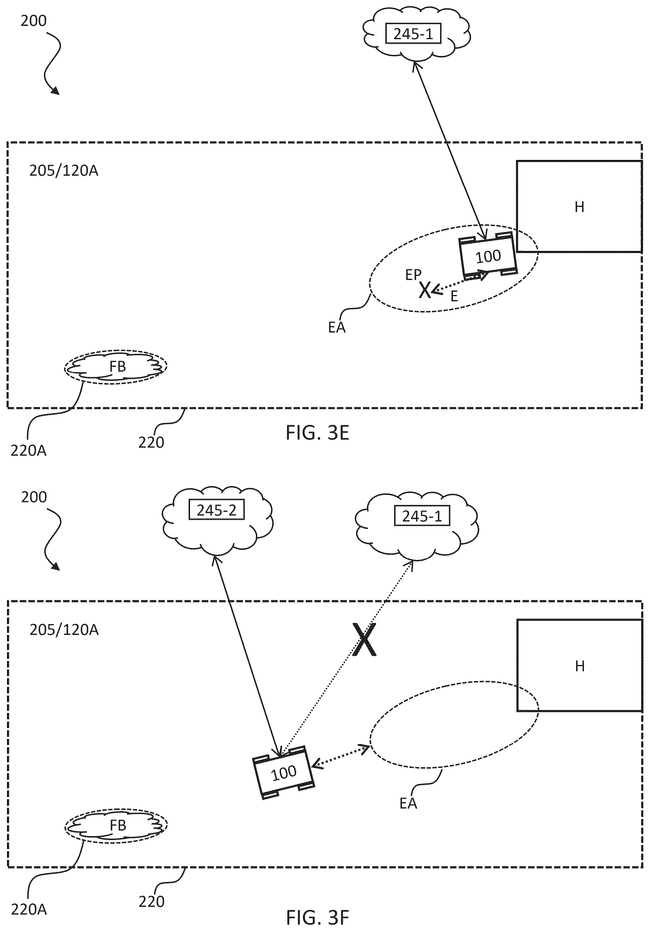

Figure 3E shows a simplified schematic view of a robotic lawnmower system 200 as discussed in relation to figures 1, 2, 3A, 3B, 3C and 3D. In figure 3E it is shown how the robotic lawnmower 100 operates based on the default GCS source 245-1. At some point, the robotic lawnmower 100 determines that its position is incorrect. In the example shown, the robotic lawnmower 100 detects this by colliding with an obstacle H which makes it clear that the robotic lawnmower 100 is not at an assumed position, marked as an erroneous position EP.

As the robotic lawnmower 100 determines that its position is incorrect, it notes this in its memory, such as in the map application 120A. In some embodiments the robotic lawnmower 100 also determines an error E, which is also stored. This enables the robotic lawnmower 100 to mark areas EA in which the GCS source is not reliable. The marked area is thus associated with a specific (one or more) GCS sources.

Figure 3F shows a simplified schematic view of a robotic lawnmower system 200 as discussed in relation to figures 1, 2, 3A, 3B, 3C, 3D and 3E. In figure 3F it is shown how the robotic lawnmower 100 operates based on the default GCS source 245-1 and determines that it is within or about to enter an area marked as not reliable for the default GCS source 245-1. In response thereto, the robotic lawnmower 100 switches from the default GCS source 245-1 to an accurate GCS source 245-2. In the example discussed with reference to figures 3E and 3F, the default GCS source 245-1 is an example of a first GCS source and the accurate GCS source 245-2 is an example of a second GCS source. The accurate GCS source 245-2 is, in some embodiments, a GCS source that has been noted as being accurate in that area. In some embodiments the accurate GCS source is a backup GCS source, such as one having a high(er) cost and/or low(er) accuracy associated with it (compared to the default GCS source 245-1).

In some embodiments the determination that the robotic lawnmower is within or about to enter such an area is based on determining that the robotic lawnmower is less than a threshold distance (including a negative distance indicating already inside) outside the area. In some embodiments the threshold distance is 0.25 0.5, 1, or 2 meter or in any range thereinbetween.

In some embodiments the determination that the robotic lawnmower it is within or about to enter such an area is based on determining that the robotic lawnmower is less than a threshold time (including a negative time indicating already inside) from entering the area. The time may be determined based on a current distance to the area and the current speed of the robotic lawnmower 100 as a skilled person would understand. In some embodiments the threshold time is 1, 2, , 5, 10, 15 or 20 seconds or in any range thereinbetween.

As would be understood by a skilled person, a robotic lawnmower can determine that it is not in its determined or expected position through a variety of methods. Here are some examples of how this can be achieved.

Boundary Wire Detection: Many robotic lawnmowers operate within a defined perimeter set by a boundary wire. The robotic lawnmower continuously checks for signals emitted by this wire. If the robotic lawnmower doesn't detect the boundary signal (either due to interference, broken wire, or signal loss), it can deduce that it has left its defined area or is off course. For example: If the robotic lawnmower expects to sense the boundary wire every few meters but detects a gap or weaker signal, it can recognize that it has moved away from its designated boundary.

Inertial Measurement Unit (IMU) and Odometry: The robotic lawnmower uses an IMU (combining accelerometer, gyroscope, and sometimes magnetometer) and wheel odometry to calculate its movements and orientation. By tracking its movement relative to an initial starting point, the robotic lawnmower can estimate its current position. If the position calculated through odometry doesn't align with where it expects to be based on the map or GPS, it can identify a position error. For example: If the robotic lawnmower has moved straight for 5 meters according to its wheels but doesn't detect the expected obstacle or boundary in that area, it may suspect that it's off course.

Visual Positioning (Camera or LiDAR): Some advanced robotic lawnmowers use visual SLAM (Simultaneous Localization and Mapping) with a camera or LiDAR sensor to map their environment. The robotic lawnmower can compare its current visual input with a saved map of the yard. If the robotic lawnmower's current view doesn't match the expected landmarks or path, it can recognize that it's in the wrong place. For example: If the robotic lawnmower's camera expects to see a tree on its left but finds it on its right, it can detect that it is not in the correct position.

Magnetic and RFID Markers: In some setups, a magnetic boundary, or other magnetic marker, or RFID tags are embedded at specific points around the yard. The robotic lawnmower checks its proximity to these markers to confirm its location. If it fails to detect an expected marker along its path, it may conclude that it has deviated from its expected location. For example: If the robotic lawnmower should detect a magnetic strip every 10 meters along its path and fails to detect one, it can infer that it is off track.

Obstacle Detection and Recalibration: Many robotic lawnmowers are equipped with sensors to detect obstacles. If the robotic lawnmower encounters an unexpected obstacle or fails to encounter a programmed boundary or expected landmark, it can detect a positional error. For example: If the robotic lawnmower's boundary sensors indicate that it has not reached the edge of the lawn within the expected distance, it may recalibrate or flag a potential positioning error.

By using one or a combination of these methods, robotic lawnmowers can effectively determine if they are out of position.

The robotic lawnmower 100 is thus enabled to dynamically switch from a first GCS source to a second GCS source depending in operating conditions, where the operating conditions may relate to a connection with a GCS source, a closeness to a boundary or being in an area marked with low reliability. It should be noted that even though the description above has been made with reference to switching from a first to a second GCS source, the robotic lawnmower 100 may be associated with more than a first and a second GCS source, and the determinations made in any of the situations discussed above may be repeated and/or nestled. For example, operating based on a default GCS source and then switching to a backup GCS source may require further switches to backup GCS sources. Also, while navigating based on a backup GCS source may require switching to a preferred GCS source when approaching a boundary, and again switching to another GCS source or back to the backup GCS source.

In some embodiments, the switching from a first GCS source (245-1) to a second GCS source (245-2) is performed during one and the same operating session, as indicated in the above discussion regarding that the robotic lawnmower 100 "is operating". Similarly, the robotic lawnmower 100 may also switch back from the second GCS source to the first GCS source, or to another (third) GCS source, and do so during the same operating session.

Figure 4 shows a flowchart for a general method according to herein. The method is for use in a robotic lawnmower as in figure 1 in a manner as discussed above in relation to figures 2, 3A, 3B, 3C, 3D, 3E and 3F, namely for use in a robotic lawnmower system comprising a robotic lawnmower 100 arranged to operate in an outdoor operational area 205, the robotic lawnmower comprising a satellite navigation sensor and being arranged to operate based on a GCS source. The method comprises the robotic lawnmower receiving error correction data for satellite navigation from a GCS source through the communication interface 115 and determine 410 a current position based on the received error correction data and the satellite navigation sensor 175, wherein the method further comprises navigating 420 based on based on the satellite navigation sensor 175 or based on the satellite navigation sensor 175 in combination with received error correction data from a first GCS source 245-1, determining 430 that operating conditions have changed, and in response thereto navigating 440 based on based on the satellite navigation sensor 175 in combination with received error correction data from a second GCS source 245-2.

All embodiments and features discussed above with reference to figures 1, 2 and 3A-3F also applies to the method as discussed in relation to figure 4, which is clear from that the description of figures 3A-3F are specifically stated to also apply to the method of figure 4.

## Claims

1. A robotic lawnmower system comprising a robotic lawnmower (100) arranged to operate in an outdoor operational area (205), and the robotic lawnmower comprising a satellite navigation sensor (175), a communication interface (115) and a controller (110), wherein the controller (110) is configured to receive error correction data for satellite navigation from a GNSS Correction Service, GCS, source through the communication interface (115) from a server (240) and determine a current position based on the received error correction data and the satellite navigation sensor (175), wherein the controller (110) is further configured to
navigate utilizing Precise Point Positioning, PPP, or Precise Point Positioning - Real-Time Kinematic, PPP-RTK, based on the satellite navigation sensor (175) in combination with error correction data received through the communication interface (115) from a first GCS source (245-1),
determine that operating conditions have changed, and in response thereto
navigate utilizing Precise Point Positioning, PPP, or Precise Point Positioning - Real-Time Kinematic, PPP-RTK, based on the satellite navigation sensor (175) in combination with error correction data received through the communication interface (115) from a second GCS source (245-2).

2. The robotic lawnmower system (300) according to claim 1, wherein the controller (110) is further configured to navigate based on the satellite navigation sensor (175) in combination with received error correction data from the GCS source (245) and switch from the first GCS source (245-1) to the second GCS source (245-2) during one and the same operating session.

3. The robotic lawnmower system (300) according to claim 1 or 2, wherein the controller (110) is further configured to also switch back from the second GCS source (245-2) to the first GCS source (245-1) during a same operating session.

4. The robotic lawnmower system (300) according to any preceding claim, wherein the controller (110) is further configured to switch from the second GCS source (245-2) to another GCS source, and to do so during a same operating session.

5. The robotic lawnmower system (300) according to any preceding claim, wherein the operating conditions relate to a desired level of performance, wherein the controller (110) is further configured to
determine that the connection with the first GCS source (245-1) is not performing as desired, and in response thereto start operating based on the satellite navigation sensor (175) in combination with received error correction data from the second GCS source (245-2).

6. The robotic lawnmower system (300) according to claim 5, wherein the controller (110) is further configured to determine that the connection with the first GCS source (245-1) is not performing as desired by determining that the error correction data is received at a quality under a quality threshold where the error correction data cannot be interpreted correctly.

7. The robotic lawnmower system (300) according to claim 5 or 6, wherein the controller (110) is further configured to determine that the connection with the first GCS source (245-1) is not performing as desired by determining that the error correction data is received at intervals exceeding a time threshold.

8. The robotic lawnmower system (300) according to any preceding claim, wherein the second GCS source (245-2) has a higher cost associated with it than the first GCS source (245-1).

9. The robotic lawnmower system (300) according to any preceding claim, wherein the first GCS source is associated with a lower accuracy than the second GCS source.

10. The robotic lawnmower system (300) according to any preceding claim, wherein the operating conditions relate to a distance to a boundary, wherein the controller (110) is further configured to
determines that the robotic lawnmower (100) it is within the threshold range, TR, of the boundary (220, 220A) for the operational area (205), and in response thereto the robotic lawnmower 100 starts operating based on the satellite navigation sensor (175) in combination with received error correction data from the second GCS source (245-2).

11. The robotic lawnmower system (300) according to any preceding claim, wherein the operating conditions relate to the robotic lawnmower (100) being in an area marked with low reliability, wherein the controller (110) is further configured to
determine that the robotic lawnmower (100) is within or about to enter an area marked as not reliable for the first GCS source (245-1), and in response thereto start operating based on the satellite navigation sensor (175) in combination with received error correction data from the second GCS source (245-2).

12. The robotic lawnmower system (300) according to claim 11, wherein the robotic lawnmower (100) further comprises a memory (120) storing a map application (120A) and wherein the area marked as not reliable for the first GCS source (245-1) is stored in the memory (120).

13. The robotic lawnmower system (300) according to claim 11 or 12, wherein the robotic lawnmower (100) is configured to determine that it is within or about to enter the marked area based on determining that the robotic lawnmower (100) is less than a threshold distance outside the marked area.

14. The robotic lawnmower system (300) according to claim 11, 12 or 13, wherein the controller (100) is configured to determine that robotic lawnmower (100) is within or about to enter the marked area based on determining that the robotic lawnmower (100) is less than a threshold time from entering the marked area.

15. The robotic lawnmower system (300) according to claim 14, wherein the controller is further configured to determine a time to enter based on a current distance to the marked area and a current speed of the robotic lawnmower (100).

16. The robotic lawnmower system (300) according to any preceding claim, wherein the controller (110) is further configured to
determine that the position of the robotic lawnmower (100) is incorrect, and in response thereto
store the position and the first GCS source in a memory of the robotic lawnmower (100) as marked area associated with the first GCS source.

17. The robotic lawnmower system (300) according to any preceding claim, wherein the controller (110) is further configured to navigate based on the satellite navigation sensor (175) in combination with received error correction data from a GCS source (245) by determining a position of the robotic lawnmower (100) based on the satellite navigation sensor (175) in combination with received error correction data from the GCS source (245).

18. A method for use in a robotic lawnmower system comprising a robotic lawnmower (100) arranged to operate in an outdoor operational area (205), the robotic lawnmower (100) comprising a controller (110), a satellite navigation sensor (175) and a communication interface (115), wherein the method comprises the controller (110):
receiving error correction data for satellite navigation from a GNSS Correction Service, GCS, source through the communication interface (115) from a server (240) and determine a current position based on the received error correction data and the satellite navigation sensor (175), wherein the method further comprises the controller (110)
navigating the robotic lawnmower utilizing Precise Point Positioning, PPP, or Precise Point Positioning - Real-Time Kinematic, PPP-RTK, based on the satellite navigation sensor (175) in combination with error correction data received through the communication interface (115) from a first GCS source (245-1),
determining that operating conditions have changed, and in response thereto
navigating utilizing Precise Point Positioning, PPP, or Precise Point Positioning - Real-Time Kinematic, PPP-RTK, based on the satellite navigation sensor (175) in combination with error correction data received through the communication interface (115) from a second GCS source (245-2).
